# EUROPEAN PATENT APPLICATION

(11) **EP 4 672 592 A1**
(43) Date of publication of application: **31.12.2025**
(21) Application number: 24758699.3
(22) Date of filing: 06.02.2024
(51) Int. Cl.: H02P 25/22, H02K 3/12, H02K 3/28

(54) **UNIT**

(30) Priority: 21.02.2023 JP 2023025127
(71) Applicant: Jatco Ltd., Shizuoka 417-8585 (JP); Kabushiki Kaisha Hayashi Kogyosho, Nakatsugawa-shi, Gifu 509-9131 (JP); Armis Corporation, Hamamatsu-City, Shizuoka 432-8561 (JP)
(72) Inventor: MAEDA, Atsushi, Fuji-shi, Shizuoka 417-8585 (JP); SUWABAYASHI, Akira, Fuji-shi, Shizuoka 417-8585 (JP); ISENO, Atsumu, Fuji-shi, Shizuoka 417-8585 (JP); ISHII, Shigeru, Fuji-shi, Shizuoka 417-8585 (JP); KAJITA, Ko, Nakatsugawa-shi, Gifu 509-9131 (JP); ASAMA, Junichi, Hamamatsu-City, Shizuoka 432-8561 (JP)
(74) Representative: Hoefer & Partner Patentanwälte mbB
(86) International application number: PCT/JP2024/003826
(87) International publication number: WO 2024/176806

(57) **Abstract**

[PROBLEMS] To provide a unit having an excellent system when constituting a rotating electrical machine having two three-phase coils.

[SOLUTIONS] A drive unit 100 includes a first battery 2a, a second battery 2b, a first inverter circuit 3a electrically connected to the first battery 2a via a first power supply line 5a, a second inverter circuit 3b electrically connected to the second battery 2b via a second power supply line 5b, a first U-phase wire 31U, a first V-phase wire 31V, and a first W-phase wire 31W electrically connected to the first inverter circuit 3a, a second U-phase wire 32U, a second V-phase wire 32V, and a second W-phase wire 32W electrically connected to the second inverter circuit 3b, and a rotor 10 rotated by a magnetic field generated by the first U-phase wire 31U, the first V-phase wire 31V, the first W-phase wire 31W, the second U-phase wire 32U, the second V-phase wire 32V, and the second W-phase wire 32W.

## Description

### TECHNICAL FIELD

The present invention relates to a unit.

### BACKGROUND ART

Patent Document 1 discloses a stator structure of a multi-phase motor (rotating electrical machine) having two three-phase coils.

### PRIOR ART DOCUMENT

### PATENT DOCUMENT

Patent Document 1: JP2005-086879A

### SUMMARY OF INVENTION

### PROBLEM TO BE SOLVED BY THE INVENTION

An object of the present invention is to provide a unit having an excellent system when constituting a rotating electrical machine having two three-phase coils.

### MEANS FOR SOLVING THE PROBLEM

According to an aspect of the present invention, there is provided a unit including: a first power supply; a second power supply; a first inverter circuit electrically connected to the first power supply via a first power supply line; a second inverter circuit electrically connected to the second power supply via a second power supply line; a first U-phase wire electrically connected to the first inverter circuit; a first V-phase wire electrically connected to the first inverter circuit; a first W-phase wire electrically connected to the first inverter circuit; a second U-phase wire electrically connected to the second inverter circuit; a second V-phase wire electrically connected to the second inverter circuit; a second W-phase wire electrically connected to the second inverter circuit; and a common rotor rotated by a magnetic field generated by the first U-phase wire, the first V-phase wire, the first W-phase wire, the second U-phase wire, the second V-phase wire, and the second W-phase wire.

### EFFECT OF THE INVENTION

According to an aspect of the present invention, it is possible to provide a unit having an excellent system when constituting a rotating electrical machine having two three-phase coils.

### BRIEF DESCRIPTION OF DRAWINGS

[FIG. 1] FIG. 1 is a configuration diagram of a unit according to an embodiment of the present invention.
[FIG. 2] FIG. 2 is a configuration diagram of a unit according to a modification of the embodiment of the present invention.
[FIG. 3] FIG. 3 is a configuration diagram illustrating a state where a rotating electrical machine according to a first embodiment is viewed from a side opposite to a lead wire side.
[FIG. 4] FIG. 4 is a configuration diagram illustrating only a first three-phase coil in FIG. 3.
[FIG. 5] FIG. 5 is a configuration diagram illustrating only a second three-phase coil in FIG. 3.
[FIG. 6] FIG. 6 is an exploded view of a winding viewed from an inner periphery with the lead wire side of the rotating electrical machine facing upward.
[FIG. 7] FIG. 7 is a graph illustrating a temporal change of an induced voltage when two windings of the same phase are wound in different forms.
[FIG. 8] FIG. 8 is a graph illustrating a temporal change of the induced voltage when the two windings of the same phase are shifted by an electric angle of 180 degrees from that in FIG. 7.
[FIG. 9] FIG. 9 is a graph illustrating a temporal change of the induced voltage when a current passing direction of one phase is reversed from that in FIG. 8.
[FIG. 10] FIG. 10 is a configuration diagram illustrating a state where a rotating electrical machine according to a second embodiment is viewed from a side opposite to a lead wire side.
[FIG. 11] FIG. 11 is a configuration diagram illustrating a state where a rotating electrical machine in which a winding is a full-pitch winding is viewed from a side opposite to a lead wire side.
[FIG. 12] FIG. 12 is an exploded view of the winding in FIG. 11 as viewed from an outer periphery with the side opposite to the lead wire side facing upward.
[FIG. 13] FIG. 13 is a configuration diagram illustrating a state where a rotating electrical machine in which a winding is a short-pitch winding is viewed from a side opposite to a lead wire side.
[FIG. 14] FIG. 14 is a configuration diagram of the winding in FIG. 13.

### DESCRIPTION OF EMBODIMENTS

Hereinafter, a rotating electrical machine drive unit (hereinafter, simply referred to as "drive unit") 100 as a unit according to an embodiment of the present invention will be described with reference to the drawings.

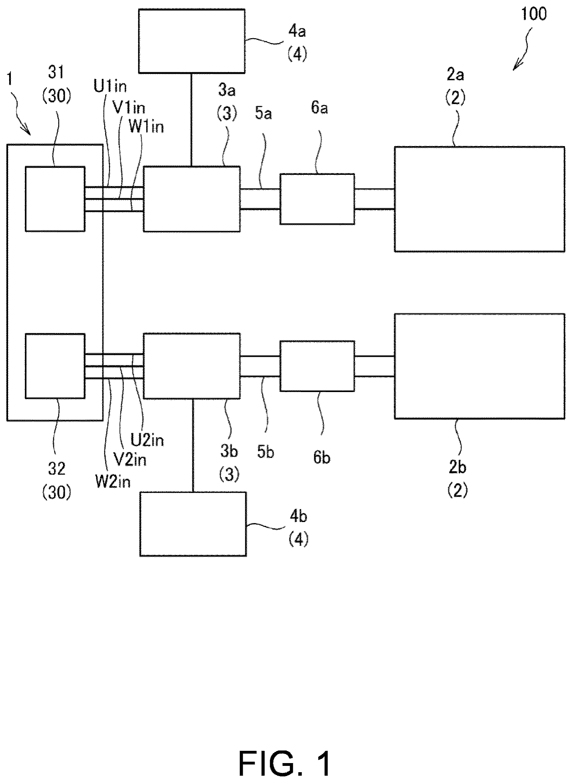

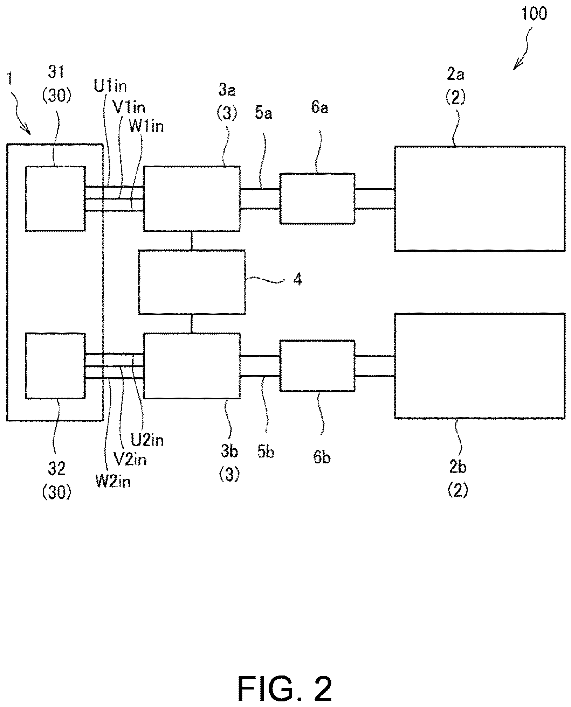

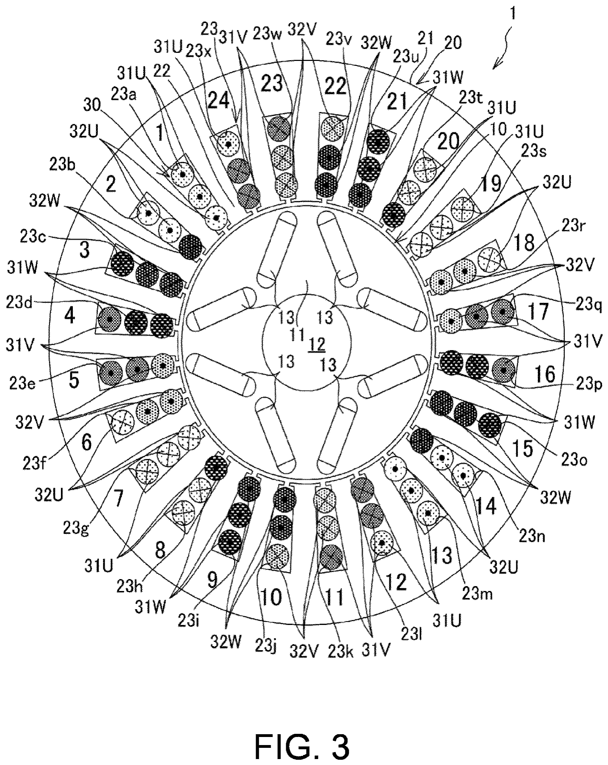

First, the configuration of the drive unit 100 will be described with reference to FIGS. 1 to 3. FIG. 1 is a configuration diagram of the drive unit 100. FIG. 2 is a configuration diagram of the drive unit 100 according to a modification. FIG. 3 is a configuration diagram illustrating a state where a rotating electrical machine 1 according to a first embodiment is viewed from a side opposite to a lead wire side.

As illustrated in FIG. 1, the drive unit 100 includes the rotating electrical machine 1, a power supply 2, an inverter circuit 3 serving as a drive circuit, and a controller 4 serving as a control device. The drive unit 100 is, for example, a unit that is mounted on a vehicle and generates a driving force for driving a drive wheel (not illustrated) in the rotating electrical machine 1 by power supplied from the power supply 2.

The rotating electrical machine 1 includes a first U-phase lead wire U1in, a first V-phase lead wire V1in, a first W-phase lead wire W1in, a second U-phase lead wire U2in, a second V-phase lead wire V2in, and a second W-phase lead wire W2in.

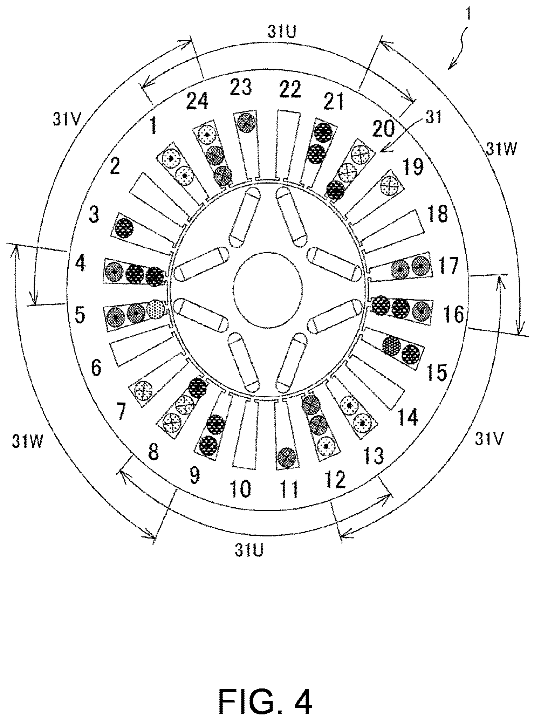

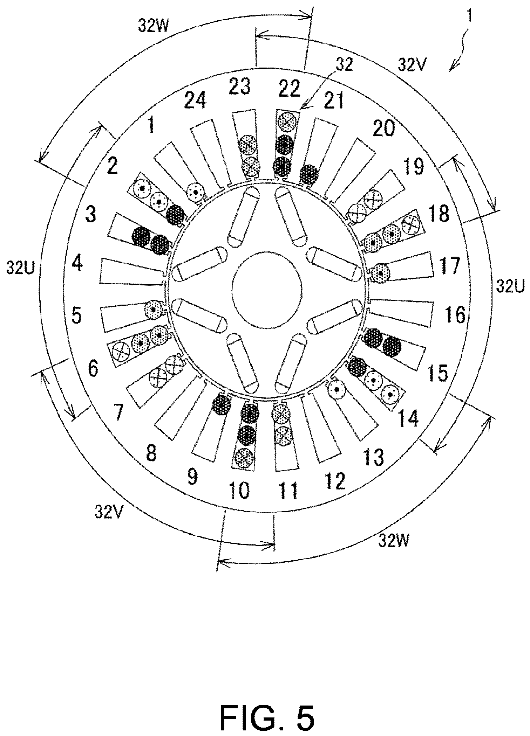

As illustrated in FIG. 3, the rotating electrical machine 1 includes a rotor 10 and a stator 20. Here, the rotating electrical machine 1 is an electric motor having two three-phase coils (first three-phase coil 31 and second three-phase coil 32) (see FIGS. 4 and 5). The rotating electrical machine 1 may be used for, for example, both an electric motor that is mounted on a vehicle and generates a driving force and a generator that is not driven to generate regenerative power. Hereinafter, a central axis direction of the rotating electrical machine 1 is referred to as an "axial direction", a rotation direction of the rotor 10 in the rotating electrical machine 1 is referred to as a "peripheral direction", and a direction radially extending from a central axis of the rotating electrical machine 1 is referred to as a "radial direction".

The rotor 10 includes a rotor core 11, a rotor shaft 12, and a plurality of permanent magnets 13. The rotor 10 is a common rotor that is rotated by a magnetic field generated by a first U-phase wire 31U, a first V-phase wire 31V, a first W-phase wire 31W, a second U-phase wire 32U, a second V-phase wire 32V, and a second W-phase wire 32W, which will be described later.

The rotor core 11 is formed in a substantially cylindrical shape extending in the axial direction. The rotor core 11 has a through hole penetrating in the axial direction. The rotor shaft 12 is provided in the through hole. The rotor core 11 is rotatably supported by the rotor shaft 12.

The plurality of permanent magnets 13 are accommodated in the rotor core 11. Here, four sets of (eight) permanent magnets 13 are provided corresponding to four poles, but the number is not limited thereto.

The stator 20 is a four-pole stator. The stator 20 includes a stator core 21 as a common core and a winding 30. In the stator 20, the first U-phase wire 31U, the first V-phase wire 31V, the first W-phase wire 31W, the second U-phase wire 32U, the second V-phase wire 32V, and the second W-phase wire 32W, which will be described later, are wound around the stator core 21.

The stator core 21 is formed in a substantially cylindrical shape extending in the axial direction. The stator core 21 is provided with a through hole penetrating in the axial direction. The rotor 10 is disposed in the through hole in a relatively rotatable manner. The stator core 21 includes a plurality of (here, 24) teeth 22 and a plurality of (here, 24) slots 23.

The teeth 22 protrude radially inward from an inner peripheral surface of the stator core 21. The plurality of teeth 22 are arranged at equal intervals in the peripheral direction on the inner peripheral surface of the stator core 21.

Each slot 23 is formed between a pair of teeth 22 adjacent to each other in the peripheral direction. The slot 23 opens in the through hole of the stator core 21. The plurality of slots 23 are arranged at equal intervals in the peripheral direction on the inner peripheral surface of the stator core 21.

Specifically, the slot 23 includes a first slot 23a, a second slot 23b, a third slot 23c, a fourth slot 23d, a fifth slot 23e, a sixth slot 23f, a seventh slot 23g, an eighth slot 23h, a ninth slot 23i, a tenth slot 23j, an eleventh slot 23k, a twelfth slot 231, a thirteenth slot 23m, a fourteenth slot 23n, a fifteenth slot 23o, a sixteenth slot 23p, a seventeenth slot 23q, an eighteenth slot 23r, a nineteenth slot 23s, a twentieth slot 23t, a twenty-first slot 23u, a twenty-second slot 23v, a twenty-third slot 23w, and a twenty-fourth slot 23x. The first to twenty-fourth slots 23a to 23x are provided in order to be adjacent to each other in the peripheral direction, and the twenty-fourth slot 23x and the first slot 23a are adjacent to each other in the peripheral direction, thereby being disposed at equal intervals over the entire periphery.

The winding 30 includes a first three-phase coil 31 and a second three-phase coil 32. That is, the rotating electrical machine 1 is a multi-phase motor that has two three-phase coils (first three-phase coil 31 and second three-phase coil 32) wound around the single stator 20 to form a double three-phase winding.

The first three-phase coil 31 includes the first U-phase wire 31U, the first V-phase wire 31V, and the first W-phase wire 31W. The first three-phase coil 31 constitutes a three-phase quadrupole coil. The second three-phase coil 32 includes the second U-phase wire 32U, the second V-phase wire 32V, and the second W-phase wire 32W. The second three-phase coil 32 constitutes a three-phase quadrupole coil. The first U-phase wire 31U, the first V-phase wire 31V, the first W-phase wire 31W, the second U-phase wire 32U, the second V-phase wire 32V, and the second W-phase wire 32W are electrically independent of one another.

A winding layout is designed such that the first U-phase wire 31U and the second U-phase wire 32U have the same phase. A winding layout is designed such that the first V-phase wire 31V and the second V-phase wire 32V have the same phase. A winding layout is designed such that the first W-phase wire 31W and the second W-phase wire 32W have the same phase.

The winding layout designed to implement the same phase means that peak (apex) positions coincide with each other when periods of induced voltage waveforms of the winding 30 of the same phase (set of first U-phase wire 31U and second U-phase wire 32U, set of first V-phase wire 31V and second V-phase wire 32V, and set of first W-phase wire 31W and second W-phase wire 32W) are equal. In this case, the amplitude (magnitude of peak) depends on a supply current, and thus does not necessarily have to coincide with each other. A specific configuration of the winding 30 in the rotating electrical machine 1 will be described later in detail with reference to FIGS. 3 to 14.

The power supply 2 includes a first battery 2a as a first power supply and a second battery 2b as a second power supply.

The first battery 2a is a secondary battery that supplies power to the first three-phase coil 31 when the rotating electrical machine 1 operates as an electric motor and stores regenerative power from the first three-phase coil 31 when the rotating electrical machine 1 operates as a generator.

The second battery 2b is a secondary battery that supplies power to the second three-phase coil 32 when the rotating electrical machine 1 operates as an electric motor and stores regenerative power from the second three-phase coil 32 when the rotating electrical machine 1 operates as a generator.

The inverter circuit 3 includes a first inverter circuit 3a and a second inverter circuit 3b.

The first inverter circuit 3a is electrically connected to the first battery 2a via a first power supply line 5a. The first inverter circuit 3a is electrically connected to the first U-phase wire 31U, the first V-phase wire 31V, and the first W-phase wire 31W via the first U-phase lead wire U1in, the first V-phase lead wire V1in, and the first W-phase lead wire W1in. Although not illustrated, the first inverter circuit 3a includes an insulated gate bipolar transistor (IGBT) serving as a plurality of switching elements and a smoothing capacitor.

The second inverter circuit 3b is electrically connected to the second battery 2b via a second power supply line 5b. The second inverter circuit 3b is electrically connected to the second U-phase wire 32U, the second U-phase wire 32V, and the second W-phase wire 32W via the second U-phase lead wire U2in, the second V-phase lead wire V2in, and the second W-phase lead wire W2in. Although not illustrated, the first inverter circuit 3a includes an insulated gate bipolar transistor (IGBT) serving as a plurality of switching elements and a smoothing capacitor.

The first power supply line 5a and the second power supply line 5b are electrically independent of each other. The first power supply line 5a is provided with a first relay circuit 6a capable of disconnecting from the first battery 2a. The second power supply line 5b is provided with a second relay circuit 6b capable of disconnecting from the second battery 2b.

The controller 4 includes a first controller 4a and a second controller 4b.

The first controller 4a controls the first inverter circuit 3a. Specifically, the first controller 4a switches on/off the plurality of IGBTs of the first inverter circuit 3a to convert DC power supplied from the first battery 2a into three-phase AC power for driving the first three-phase coil 31 of the rotating electrical machine 1. In addition, the first controller 4a switches on/off the plurality of IGBTs of the first inverter circuit 3a to convert the regenerative power (three-phase AC power) from the first three-phase coil 31 of the rotating electrical machine 1 into DC power capable of charging the first battery 2a.

The second controller 4b controls the second inverter circuit 3b. Specifically, the second controller 4b switches on/off the plurality of IGBTs of the second inverter circuit 3b to convert DC power supplied from the second battery 2b into three-phase AC power for driving the second three-phase coil 32 of the rotating electrical machine 1. In addition, the second controller 4b switches on/off the plurality of IGBTs of the second inverter circuit 3b to convert the regenerative power (three-phase AC power) from the second three-phase coil 32 of the rotating electrical machine 1 into DC power capable of charging the second battery 2b.

In this way, by dividing the controller 4 into the first controller 4a and the second controller 4b, the first controller 4a and the second controller 4b can be disposed at different positions, so that the layout property in the vehicle can be improved.

Alternatively, the first inverter circuit 3a and the second inverter circuit 3b may be controlled by the single controller 4, as in the modification illustrated in FIG. 2. When the single controller 4 is provided, it is possible to reduce the size of the drive unit 100 and the number of components.

Here, the inverter circuit 3 (IGBT, smoothing capacitor part) may be common to the first U-, V-, and W-phase wires 31U, 31V, and 31W and the second U-, V-, and W-phase wires 32U, 32V, and 32W, or may be provided separately. When the inverter circuit 3 is common, the advantage of reducing the number of components can be obtained. On the other hand, when the inverter circuit 3 is provided separately, the amount of current can be reduced as compared with the case where the inverter circuit 3 is common. That is, when the inverter circuit 3 is common, for example, it is necessary to supply the amount of current necessary for the first U-phase wire 31U and the amount of current necessary for the second U-phase wire 32U by one wiring, but when the inverter circuit 3 is provided separately, the wiring can be divided into the first power supply line 5a and the second power supply line 5b, and it is possible to reduce the amount of current supplied to one wiring. In an aspect of the present invention, the latter advantage of reducing the amount of current is selected.

In addition, when the inverter circuit 3 is separately provided, the power supply 2 of each inverter circuit 3 may be common or may be separately provided. When the power supply 2 of each inverter circuit 3 is common, the advantage of reducing the number of components can be obtained. On the other hand, when the power supply 2 of each inverter circuit 3 is separately provided, the amount of current can be reduced as compared with the case where the power supply 2 is common. That is, when the power supply 2 of the inverter circuit 3 is common, for example, it is necessary to supply the amount of current necessary for the two inverter circuits 3 by one wiring, but when the power supply 2 of the inverter circuit 3 is provided separately, the wiring can be divided into the first power supply line 5a and the second power supply line 5b, and it is possible to reduce the amount of current supplied to one wiring. In an aspect of the present invention, the latter advantage of reducing the amount of current is selected.

In this way, the maximum amount of current flowing in the drive unit 100 can be reduced by intentionally dividing the inverter circuit 3 and the power supply 2 into a plurality of parts and making the plurality of parts electrically independent of each other, and accordingly, dividing various wirings into a plurality of parts and making the plurality of parts electrically independent of each other, without sacrificing the reduction in the number of components.

Here, in a case where the voltage is higher than a predetermined value, there is a case where a measure against a high voltage is necessary in terms of regulation, and thus there is a demand to lower a use voltage (for example, 48 V) under a certain condition. In such a case, when a torque (output) of the rotating electrical machine 1 is required, it is also necessary to increase the current amount in order to improve the output. In such a situation, when an aspect of the present invention is applied, the peak value of the current amount can be lowered by separating the power supply 2, the inverter circuit 3, and the wiring (first power supply line 5a and second power supply line 5b). An aspect of the present invention can be said to be a particularly useful technique in such a situation.

Next, an embodiment of the rotating electrical machine 1 applicable to the drive unit 100 will be described.

### <First embodiment>

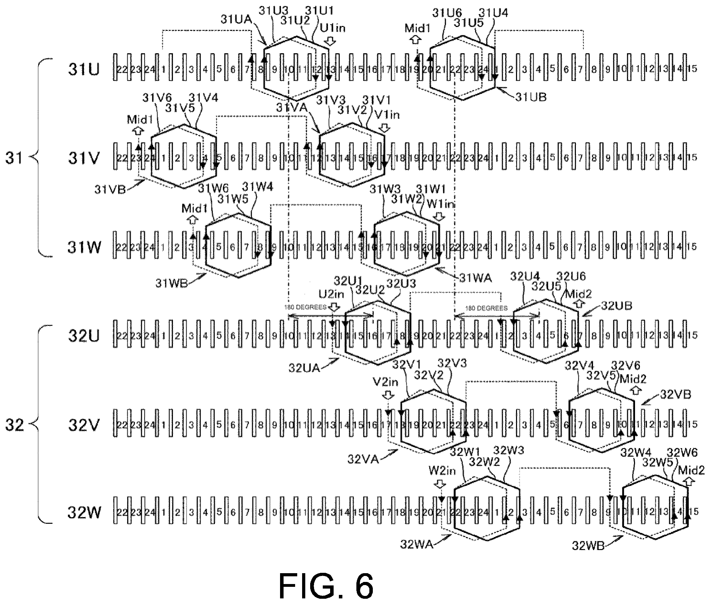

First, the configuration of the rotating electrical machine 1 according to the first embodiment will be described with reference to FIGS. 3 to 6. FIG. 3 is a configuration diagram illustrating a state where the rotating electrical machine 1 is viewed from a side opposite to a lead wire side. FIG. 4 is a configuration diagram illustrating only the first three-phase coil 31 in FIG. 3. FIG. 5 is a configuration diagram illustrating only the second three-phase coil 32 in FIG. 3. FIG. 6 is an exploded view of the winding 30 viewed from an inner periphery with the lead wire side of the rotating electrical machine 1 facing upward.

In FIGS. 3 to 5, ∘ with × drawn therein indicates that the winding 30 is wound from a front side toward a back side and a current flows from the front side toward the back side. ∘ with • drawn therein indicates that the winding 30 is wound from the back side toward the front side, and a current flows from the back side toward the front side.

The plurality of slots 23 are implemented such that the winding 30 passes through each slot an odd number of times. Here, the stator 20 is implemented such that the winding 30 passes through each of the plurality of slots 23 three times. Accordingly, it is possible to limit the number of winding to the minimum and improve manufacturability. That is, an aspect of the present invention acts particularly suitably in such a case, and the number of times of passage of the winding 30 in each slot 23 is easily equalized.

As illustrated in FIGS. 3 and 5, the first U-phase wire 31U is wound in the plurality of slots 23. The first U-phase wire 31U includes a first winding 31U1, a second winding 31U2, a third winding 31U3, a fourth winding 31U4, a fifth winding 31U5, and a sixth winding 31U6.

The first winding 31U1 is implemented by winding, between the thirteenth slot 23m and the eighth slot 23h, the winding 30 input from the first U-phase lead wire U1in connected to a three-phase AC power supply (not illustrated). The second winding 31U2 is wound between the thirteenth slot 23m and the eighth slot 23h continuously from the first winding 31U1 wound in the eighth slot 23h. The third winding 31U3 is wound between the twelfth slot 231 and the seventh slot 23g continuously from the second winding 31U2 wound in the eighth slot 23h.

The fourth winding 31U4 is wound between the first slot 23a and the twentieth slot 23t continuously from the third winding 31U3 wound in the seventh slot 23g. The fifth winding 31U5 is wound between the first slot 23a and the twentieth slot 23t continuously from the fourth winding 31U4 wound in the twentieth slot 23t. The sixth winding 31U6 is wound between the twenty-fourth slot 23x and the nineteenth slot 23s continuously from the fifth winding 31U5 wound in the twentieth slot 23t. The sixth winding 31U6 is wound in the nineteenth slot 23s and then connected to a first neutral point Mid1.

In this way, the first U-phase wire 31U includes a first coil 31UA wound twice between the thirteenth slot 23m and the eighth slot 23h and wound once between the twelfth slot 231 and the seventh slot 23g, and a second coil 31UB wound twice between the first slot 23a and the twentieth slot 23t and wound once between the twenty-fourth slot 23x and the nineteenth slot 23s.

The first V-phase wire 31V includes a first winding 31V1, a second winding 31V2, a third winding 31V3, a fourth winding 31V4, a fifth winding 31V5, and a sixth winding 31V6.

The first winding 31V1 is implemented by winding, between the seventeenth slot 23q and the twelfth slot 231, the winding 30 input from the first V-phase lead wire V1in connected to the three-phase AC power supply. The second winding 31V2 is wound between the seventeenth slot 23q and the twelfth slot 231 continuously from the first winding 31V1 wound in the twelfth slot 231. The third winding 31V3 is wound between the sixteenth slot 23p and the eleventh slot 23k continuously from the second winding 31V2 wound in the twelfth slot 231.

The fourth winding 31V4 is wound between the fifth slot 23e and the twenty-fourth slot 24x continuously from the third winding 31V3 wound in the eleventh slot 23k. The fifth winding 31V5 is wound between the fifth slot 23e and the twenty-fourth slot 23x continuously from the fourth winding 31V4 wound in the twenty-fourth slot 23x. The sixth winding 31V6 is wound between the fourth slot 23d and the twenty-third slot 23w continuously from the fifth winding 31V5 wound in the twenty-fourth slot 23x. The sixth winding 31V6 is wound in the twenty-third slot 23w and then connected to the first neutral point Mid1.

In this way, the first V-phase wire 31V includes a first coil 31VA wound twice between the seventeenth slot 23q and the twelfth slot 231 and wound once between the sixteenth slot 23p and the eleventh slot 23k, and a second coil 31VB wound twice between the fifth slot 23e and the twenty-fourth slot 23x and wound once between the fourth slot 23d and the twenty-third slot 23w.

The first W-phase wire 31W includes a first winding 31W1, a second winding 31W2, a third winding 31W3, a fourth winding 31W4, a fifth winding 31W5, and a sixth winding 31W6.

The first winding 31W1 is implemented by winding, between the twenty-first slot 23u and the sixteenth slot 23p, the winding 30 input from the first W-phase lead wire W1in connected to the three-phase AC power supply. The second winding 31W2 is wound between the twenty-first slot 23u and the sixteenth slot 23p continuously from the first winding 31W1 wound in the sixteenth slot 23p. The third winding 31W3 is wound between the twentieth slot 23t and the fifteenth slot 23o continuously from the second winding 31W2 wound in the sixteenth slot 23p.

The fourth winding 31W4 is wound between the ninth slot 23i and the fourth slot 24d continuously from the third winding 31W3 wound in the fifteenth slot 23o. The fifth winding 31W5 is wound between the ninth slot 23i and the fourth slot 23d continuously from the fourth winding 31W4 wound in the fourth slot 23d. The sixth winding 31W6 is wound between the eighth slot 23h and the third slot 23c continuously from the fifth winding 31W5 wound in the fourth slot 23d. The sixth winding 31V6 is wound in the third slot 23c and then connected to the first neutral point Mid1.

In this way, the first W-phase wire 31W includes a first coil 31WA wound twice between the twenty-first slot 23u and the sixteenth slot 23p and wound once between the twentieth slot 23t and the fifteenth slot 23o, and a second coil 31WB wound twice between the ninth slot 23i and the fourth slot 23d and wound once between the eighth slot 23h and the third slot 23c.

As illustrated in FIGS. 3 and 6, the second U-phase wire 32U is wound in the plurality of slots 23. The second U-phase wire 32U includes a first winding 32U1, a second winding 32U2, a third winding 32U3, a fourth winding 32U4, a fifth winding 32U5, and a sixth winding 32U6.

The first winding 32U1 is implemented by winding, between the thirteenth slot 23m and the eighteenth slot 23r, the winding 30 input from the second U-phase lead wire U2in connected to the three-phase AC power supply. The second winding 32U2 is wound between the fourteenth slot 23n and the nineteenth slot 23s continuously from the first winding 32U1 wound in the eighteenth slot 23r. The third winding 32U3 is wound between the fourteenth slot 23n and the nineteenth slot 23s continuously from the second winding 32U2 wound in the nineteenth slot 23s.

The fourth winding 32U4 is wound between the first slot 23a and the sixth slot 23f continuously from the third winding 32U3 wound in the nineteenth slot 23s. The fifth winding 32U5 is wound between the second slot 23b and the seventh slot 23g continuously from the fourth winding 32U4 wound in the sixth slot 23f. The sixth winding 32U6 is wound between the second slot 23b and the seventh slot 23g continuously from the fifth winding 32U5 wound in the seventh slot 23g. The sixth winding 32U6 is wound in the seventh slot 23g and then connected to a second neutral point Mid2.

In this way, the second U-phase wire 32U includes a first coil 32UA wound once between the thirteenth slot 23m and the eighteenth slot 23r and wound twice between the fourteenth slot 23n and the nineteenth slot 23s, and a second coil 32UB wound once between the first slot 23a and the sixth slot 23f and wound twice between the second slot 23b and the seventh slot 23g.

In addition, as illustrated in FIG. 6, the second U-phase wire 32U is wound at a slot position where the current passing direction is reversed with respect to the first U-phase wire 31U and is shifted by an electric angle of 180 degrees (mechanical angle of 90 degrees).

The second V-phase wire 32V includes a first winding 32V1, a second winding 32V2, a third winding 32V3, a fourth winding 32V4, a fifth winding 32V5, and a sixth winding 32V6.

The first winding 32V1 is implemented by winding, between the seventeenth slot 23q and the twenty-second slot 23v, the winding 30 input from the second V-phase lead wire V2in connected to the three-phase AC power supply. The second winding 32V2 is wound between the eighteenth slot 23r and the twenty-third slot 23w continuously from the first winding 32V1 wound in the twenty-second slot 23v. The third winding 32V3 is wound between the eighteenth slot 23r and the twenty-third slot 23w continuously from the second winding 32V2 wound in the twenty-third slot 23w.

The fourth winding 32V4 is wound between the fifth slot 23e and the tenth slot 24j continuously from the third winding 32V3 wound in the twenty-third slot 23w. The fifth winding 32V5 is wound between the sixth slot 23f and the eleventh slot 23k continuously from the fourth winding 32V4 wound in the tenth slot 23j. The sixth winding 32V6 is wound between the sixth slot 23f and the eleventh slot 23k continuously from the fifth winding 32V5 wound in the eleventh slot 23k. The sixth winding 32V6 is wound in the eleventh slot 23k and then connected to the second neutral point Mid2.

In this way, the second V-phase wire 32V includes a first coil 32VA wound once between the seventeenth slot 23q and the twenty-second slot 23v and wound twice between the eighteenth slot 23r and the twenty-third slot 23w, and a second coil 32VB wound once between the fifth slot 23e and the tenth slot 23j and wound twice between the sixth slot 23f and the eleventh slot 23k.

As illustrated in FIG. 6, the second V-phase wire 32V is wound at a slot position where the current passing direction is reversed with respect to the first V-phase wire 31V and is shifted by an electric angle of 180 degrees (mechanical angle of 90 degrees).

The second W-phase wire 32W includes a first winding 32W1, a second winding 32W2, a third winding 32W3, a fourth winding 32W4, a fifth winding 32W5, and a sixth winding 32W6.

The first winding 32W1 is implemented by winding, between the twenty-first slot 23u and the second slot 23b, the winding 30 input from the second W-phase lead wire W2in connected to the three-phase AC power supply. The second winding 32W2 is wound between the twenty-second slot 23v and the third slot 23c continuously from the first winding 32W1 wound in the second slot 23b. The third winding 32W3 is wound between the twenty-second slot 23v and the third slot 23c continuously from the second winding 32W2 wound in the third slot 23c.

The fourth winding 32W4 is wound between the ninth slot 23i and the fourteenth slot 24n continuously from the third winding 32W3 wound in the third slot 23c. The fifth winding 32W5 is wound between the tenth slot 23j and the fifteenth slot 23o continuously from the fourth winding 32W4 wound in the fourteenth slot 23n. The sixth winding 32W6 is wound between the tenth slot 23j and the fifteenth slot 23o continuously from the fifth winding 32W5 wound in the fifteenth slot 23o. The sixth winding 32V6 is wound in the fifteenth slot 23o and then connected to the second neutral point Mid2.

In this way, the second W-phase wire 32W includes a first coil 32WA wound once between the twenty-first slot 23u and the second slot 23b and wound twice between the twenty-second slot 23v and the third slot 23c, and a second coil 32WB wound once between the ninth slot 23i and the fourteenth slot 23n and wound twice between the tenth slot 23j and the fifteenth slot 23o.

As illustrated in FIG. 6, the second W-phase wire 32W is wound at a slot position where the current passing direction is reversed with respect to the first W-phase wire 31W and is shifted by an electric angle of 180 degrees.

As illustrated in FIGS. 4 and 5, the first U-phase wire 31U, the first V-phase wire 31V, the first W-phase wire 31W, the second U-phase wire 32U, the second V-phase wire 32V, and the second W-phase wire 32W are implemented as short-pitch windings in which a pole pitch is different from a coil pitch. Accordingly, as compared with a full-pitch winding, the number of times the winding 30 passes through each slot 23 can be easily aligned in the short-pitch winding in which the coil pitch can be variably set.

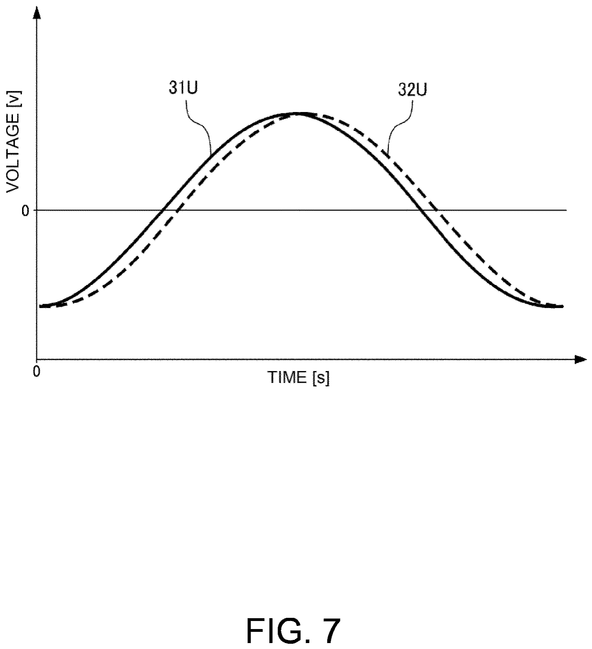

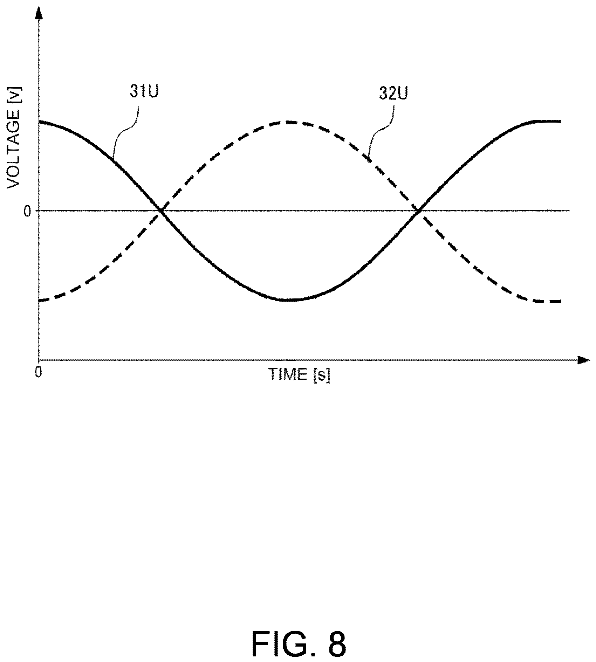

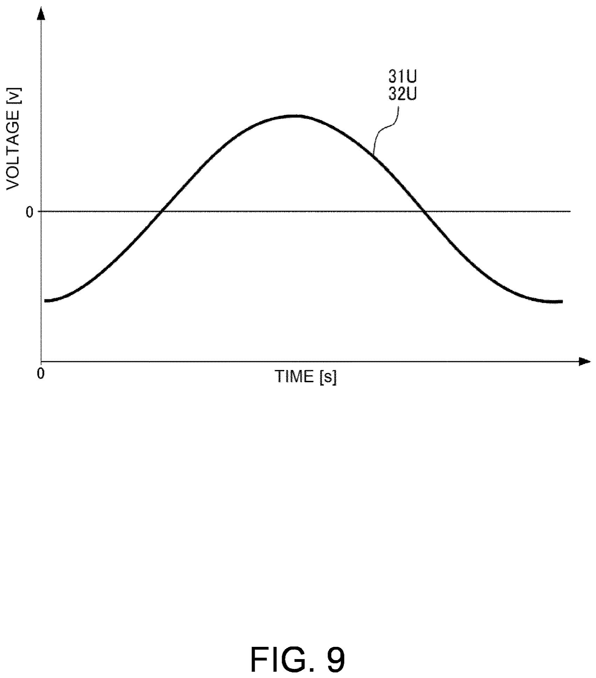

Next, the operation of the rotating electrical machine 1 according to the first embodiment will be described with reference to FIGS. 7 to 9. FIG. 7 is a graph illustrating a temporal change of an induced voltage when two windings 30 of the same phase are wound in different forms. FIG. 8 is a graph illustrating a temporal change of the induced voltage when two windings 30 of the same phase are shifted by an electric angle of 180 degrees from that in FIG. 7. FIG. 9 is a graph illustrating a temporal change of the induced voltage when a current passing direction of one phase is reversed from that in FIG. 8.

Only the first U-phase wire 31U and the second U-phase wire 32U are illustrated in FIGS. 7 to 9, and the same applies to the first V-phase wire 31V and the second V-phase wire 32V as well as the first W-phase wire 31W and the second W-phase wire 32W.

In the case of a configuration of an odd number of turns in which the winding 30 passes each of the plurality of slots 23 an odd number of times, it is difficult to align the winding 30 of the same phase in one slot 23. Therefore, as illustrated in FIG. 5, the two windings 30 of the same phase are wound in different forms, so that positive vertices of waveforms of dielectric voltages are usually shifted from each other. When the positive vertices of the waveforms of the dielectric voltages are shifted from each other, it is necessary to precisely perform cooperative control including the control on the first U-, V-, and W-phase wires 31U, 31V, and 31W and the control on the second U-, V-, and W-phase wires 32U, 32V, and 32W in order to smoothly rotate the rotor 10, which increases the difficulty level of the control design.

Therefore, the following concept is introduced as a concept in an aspect of the present invention. That is, as illustrated in FIG. 6, the positive vertex and the negative vertex are made to coincide with each other by shifting the two windings 30 of the same phase by an electric angle of 180 degrees. However, as illustrated in FIG. 6, the induced voltage is canceled when the positive vertex and the negative vertex coincide with each other. Therefore, as illustrated in FIG. 7, the negative vertex is inverted to the positive vertex by inverting the current passing direction. Accordingly, in a configuration of odd number of turns in which the two windings 30 of the same phase have to be formed in different forms, the vertices of the two windings 30 of the same phase can also be made to coincide with each other. That is, the phases of the same type can be designed to coincide with each other.

In addition, in a case where the power supply 2 is divided into two power supplies, even when there is a performance difference between the two power supplies 2, the rotor 10 can be continuously and smoothly rotated without particularly difficult control because the positions of the positive and negative vertices of the induced voltage coincide with each other by making the phases of the same type coincide with each other. This means that, although it may be said that the use of two power supplies 2 of different types is not intended, even when two power supplies 2 of the same type are used, it may be said that the use of two power supplies 2 of the same type is not intended to cause a difference in performance due to deterioration over time caused by manufacturing variations of the two power supplies 2. Therefore, it greatly contributes to reduction in the difficulty level of a control design in consideration of deterioration over time (initial control design, learning control design in which deterioration over time is monitored, or the like).

### <Second Embodiment>

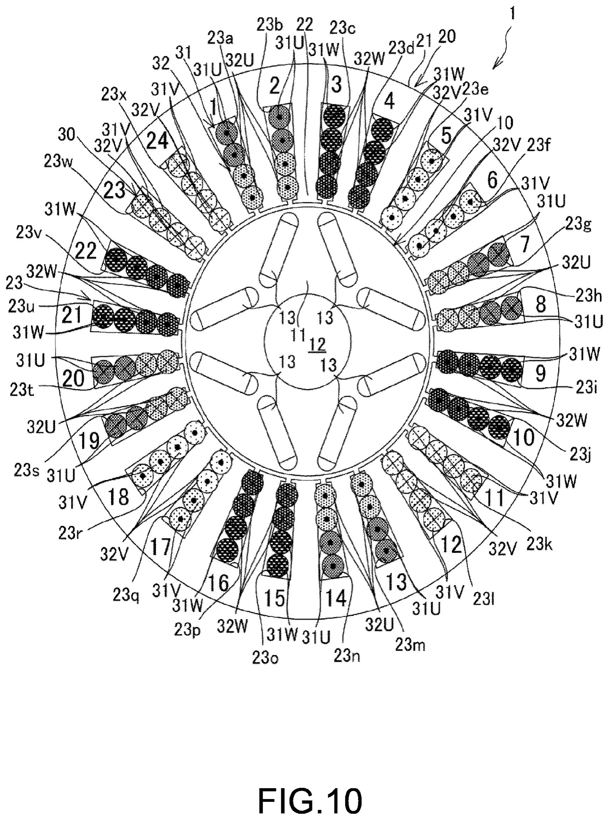

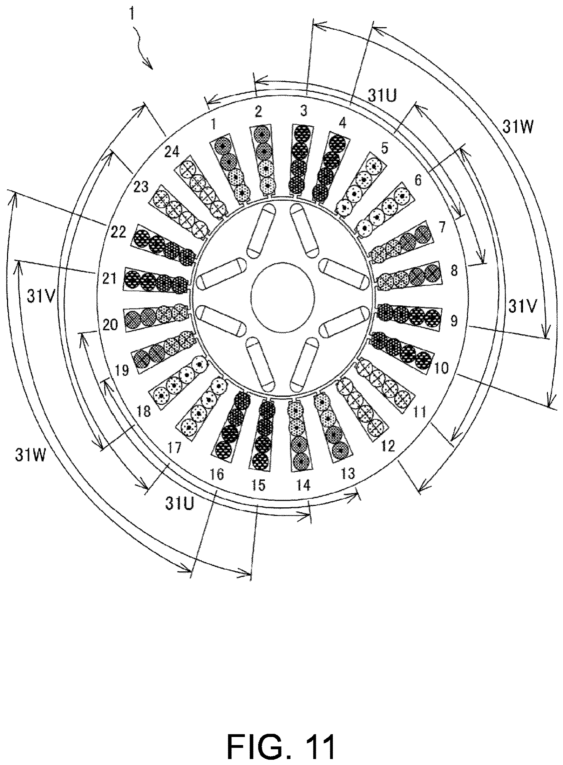

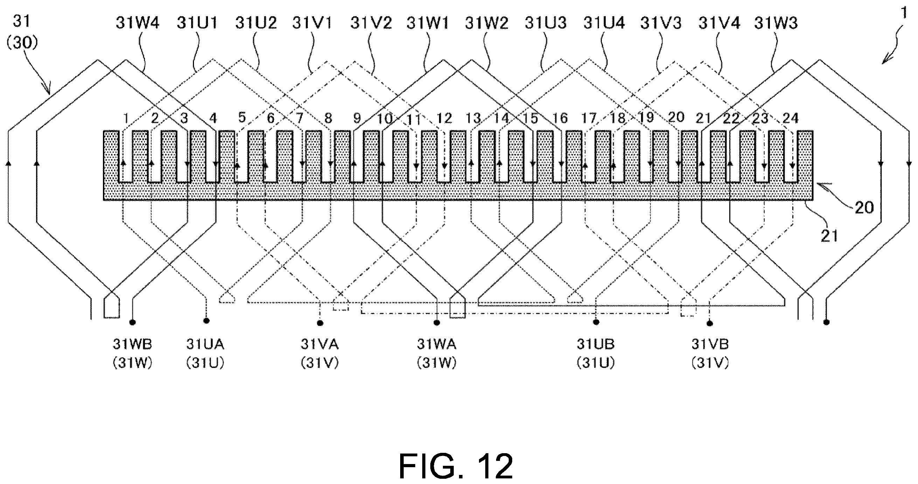

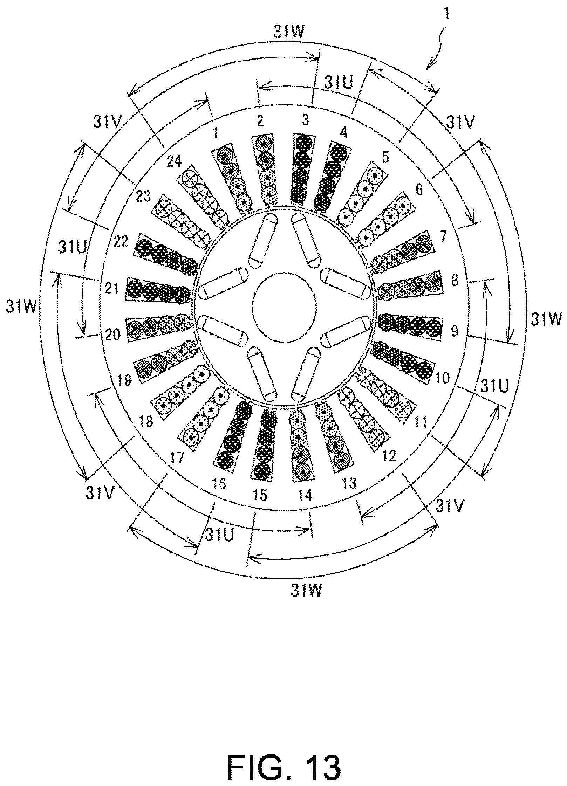

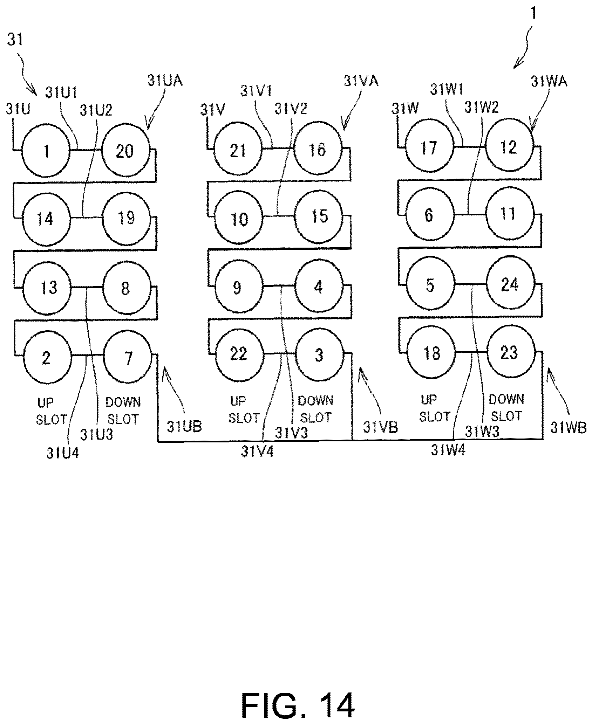

Next, a configuration of the rotating electrical machine 1 according to a second embodiment will be described with reference to FIGS. 10 to 14. FIG. 10 is a configuration diagram illustrating a state where the rotating electrical machine 1 is viewed from a side opposite to a lead wire side. FIG. 11 is a configuration diagram illustrating a state where the rotating electrical machine 1 in which the winding 30 is a full-pitch winding is viewed from a side opposite to a lead wire side. FIG. 12 is an exploded view of the winding 30 in FIG. 11 as viewed from an outer periphery with the side opposite to the lead wire side facing upward. FIG. 13 is a configuration diagram illustrating a state where the rotating electrical machine 1 in which the winding 30 is a short-pitch winding is viewed from a side opposite to a lead wire side. FIG. 14 is a configuration diagram of the winding 30 in FIG. 13. In the following description, the same components as those of the first embodiment described above are denoted by the same reference numerals, and redundant description thereof will be appropriately omitted.

In FIGS. 10, 11, and 13, ∘ with × drawn therein indicates that the winding 30 is wound from the front side toward the back side and a current flows from the front side toward the back side. ∘ with • drawn therein indicates that the winding 30 is wound from the back side toward the front side, and a current flows from the back side toward the front side.

The plurality of slots 23 are implemented such that the winding 30 passes through each slot an even number of times. Here, the stator 20 is implemented such that the winding 30 passes through each of the plurality of slots 23 four times. Accordingly, it is possible to limit the number of winding to the minimum and improve manufacturability. That is, an aspect of the present invention acts particularly suitably in such a case, and the number of times of passage of the winding 30 in each slot 23 is easily equalized.

First, a case where the winding 30 is a full-pitch winding will be described with reference to FIGS. 10 to 12. In FIGS. 11 and 12, only the first three-phase coil 31 is illustrated, and the second three-phase coil 32 is not illustrated because it is the same as the first three-phase coil 31.

As illustrated in FIGS. 10 and 12, the first U-phase wire 31U is wound in the plurality of slots 23. The first U-phase wire 31U includes a pair of the first windings 31U1, a pair of the second windings 31U2, a pair of the third windings 31U3, and a pair of the fourth windings 31U4. The first winding 31U1, the second winding 31U2, the third winding 31U3, and the fourth winding 31U4 are wound twice in the same slot 23.

The first winding 31U1 is implemented by winding, between the first slot 23a and the seventh slot 23g, the winding 30 input from the first U-phase lead wire U1in connected to a three-phase AC power supply (not illustrated). The second winding 31U2 is wound between the second slot 23b and the eighth slot 23h continuously from the first winding 31U1 wound in the seventh slot 23g.

The third winding 31U3 is wound between the thirteenth slot 23m and the nineteenth slot 23s continuously from the second winding 31U2 wound in the eighth slot 23h. The fourth winding 31U4 is wound between the fourteenth slot 23n and the twentieth slot 23t continuously from the third winding 31U3 wound in the nineteenth slot 23s.

In this way, the first U-phase wire 31U includes the first coil 31UA wound between the first slot 23a and the seventh slot 23g and then wound between the second slot 23b and the eighth slot 23h, and the second coil 31UB wound between the thirteenth slot 23m and the nineteenth slot 23s and then wound between the fourteenth slot 23n and the twentieth slot 23t.

The first V-phase wire 31V includes a pair of the first windings 31V1, a pair of the second windings 31V2, a pair of the third windings 31V3, and a pair of the fourth windings 31V4. The first winding 31V1, the second winding 31V2, the third winding 31V3, and the fourth winding 31V4 are wound twice in the same slot 23.

The first winding 31V1 is implemented by winding, between the fifth slot 23e and the eleventh slot 23k, the winding 30 input from the first V-phase lead wire V1in connected to the three-phase AC power supply. The second winding 31V2 is wound between the sixth slot 23f and the twelfth slot 231 continuously from the first winding 31V1 wound in the eleventh slot 23k.

The third winding 31V3 is wound between the seventeenth slot 23q and the twenty-third slot 23w continuously from the second winding 31V2 wound in the twelfth slot 231. The fourth winding 31V4 is wound between the eighteenth slot 23r and the twenty-fourth slot 24x continuously from the third winding 31V3 wound in the twenty-third slot 23w.

In this way, the first V-phase wire 31V includes the first coil 31VA wound between the fifth slot 23e and the eleventh slot 23k and then wound between the sixth slot 23f and the twelfth slot 231, and the second coil 31VB wound between the seventeenth slot 23q and the twenty-third slot 23w and then wound between the eighteenth slot 23r and the twenty-fourth slot 23x.

The first W-phase wire 31W includes a pair of the first windings 31W1, a pair of the second windings 31W2, a pair of the third windings 31W3, and a pair of the fourth windings 31W4. The first winding 31W1, the second winding 31W2, the third winding 31W3, and the fourth winding 31W4 are wound twice in the same slot 23.

The first winding 31W1 is implemented by winding, between the ninth slot 23i and the fifteenth slot 23o, the winding 30 input from the first W-phase lead wire W1in connected to the three-phase AC power supply. The second winding 31W2 is wound between the tenth slot 23j and the sixteenth slot 23p continuously from the first winding 31W1 wound in the fifteenth slot 23o.

The third winding 31W3 is wound between the twenty-first slot 23u and the third slot 23c continuously from the second winding 31W2 wound in the sixteenth slot 23p. The fourth winding 31W4 is wound between the twenty-second slot 23v and the fourth slot 24d continuously from the third winding 31W3 wound in the third slot 23c.

In this way, the first W-phase wire 31W includes the first coil 31WA wound between the ninth slot 23i and the fifteenth slot 23o and then wound between the tenth slot 23j and the sixteenth slot 23p, and the second coil 31WB wound between the twenty-first slot 23u and the third slot 23c and then wound between the twenty-second slot 23v and the fourth slot 23d.

The second U-phase wire 32U is wound in the plurality of slots 23. The second U-phase wire 32U is wound so as to pass through the same slot 23 the same number of times as the first U-phase wire 31U and to have the same current passing direction as the first U-phase wire 31U, and thus detailed description thereof is omitted here.

The second V-phase wire 32V is wound in the plurality of slots 23. The second V-phase wire 32V is wound so as to pass through the same slot 23 the same number of times as the first V-phase wire 31V and to have the same current passing direction as the first V-phase wire 31V, and thus detailed description thereof is omitted here.

The second W-phase wire 32W is wound in the plurality of slots 23. The second W-phase wire 32W is wound so as to pass through the same slot 23 the same number of times as the first W-phase wire 31W and to have the same current passing direction as the first W-phase wire 31W, and thus detailed description thereof is omitted here.

As illustrated in FIG. 2, the first U-phase wire 31U, the first V-phase wire 31V, the first W-phase wire 31W, the second U-phase wire 32U, the second V-phase wire 32V, and the second W-phase wire 32W are implemented as full-pitch windings in which a pole pitch is the same as a coil pitch.

Next, a case where the winding 30 is a short-pitch winding will be described with reference to FIGS. 10, 13, and 14. In FIGS. 13 and 14, only the first three-phase coil 31 is illustrated, and the second three-phase coil 32 is not illustrated because it is the same as the first three-phase coil 31.

As illustrated in FIGS. 10 and 14, the first U-phase wire 31U is wound in the plurality of slots 23. The first U-phase wire 31U includes a pair of the first windings 31U1, a pair of the second windings 31U2, a pair of the third windings 31U3, and a pair of the fourth windings 31U4. The first winding 31U1, the second winding 31U2, the third winding 31U3, and the fourth winding 31U4 are wound twice in the same slot 23.

The first winding 31U1 is implemented by winding, between the first slot 23a and the twentieth slot 23t, the winding 30 input from the first U-phase lead wire U1in connected to the three-phase AC power supply (not illustrated). The second winding 31U2is wound between the fourteenth slot 23n and the nineteenth slot 23s continuously from the first winding 31U1 wound in the twentieth slot 23t.

The third winding 31U3 is wound between the thirteenth slot 23m and the eighth slot 23h continuously from the second winding 31U2 wound in the nineteenth slot 23s. The fourth winding 31U4 is wound between the second slot 23b and the seventh slot 23g continuously from the third winding 31U3 wound in the eighth slot 23h.

In this way, the first U-phase wire 31U includes the first coil 31UA wound between the first slot 23a and the twentieth slot 23t and then wound between the fourteenth slot 23n and the nineteenth slot 23s, and the second coil 31UB wound between the thirteenth slot 23m and the eighth slot 23h and then wound between the second slot 23b and the seventh slot 23g.

The first V-phase wire 31V includes a pair of the first windings 31V1, a pair of the second windings 31V2, a pair of the third windings 31V3, and a pair of the fourth windings 31V4. The first winding 31V1, the second winding 31V2, the third winding 31V3, and the fourth winding 31V4 are wound twice in the same slot 23.

The first winding 31V1 is implemented by winding, between the twenty-first slot 23u and the sixteenth slot 23p, the winding 30 input from the first V-phase lead wire V1in connected to the three-phase AC power supply. The second winding 31V2 is wound between the tenth slot 23j and the fifteenth slot 23o continuously from the first winding 31V1 wound in the sixteenth slot 23p.

The third winding 31V3 is wound between the ninth slot 23i and the fourth slot 23d continuously from the second winding 31V2 wound in the fifteenth slot 23o. The fourth winding 31V4 is wound between the twenty-second slot 23v and the third slot 24c continuously from the third winding 31V3 wound in the fourth slot 23d.

In this way, the first V-phase wire 31V includes the first coil 31VA wound between the twenty-first slot 23u and the sixteenth slot 23p and then wound between the tenth slot 23j and the fifteenth slot 23o, and the second coil 31VB wound between the ninth slot 23i and the fourth slot 23d and then wound between the twenty-second slot 23v and the third slot 23c.

The first W-phase wire 31W includes a pair of the first windings 31W1, a pair of the second windings 31W2, a pair of the third windings 31W3, and a pair of the fourth windings 31W4. The first winding 31W1, the second winding 31W2, the third winding 31W3, and the fourth winding 31W4 are wound twice in the same slot 23.

The first winding 31W1 is implemented by winding, between the seventeenth slot 23q and the twelfth slot 231, the winding 30 input from the first W-phase lead wire W1in connected to the three-phase AC power supply. The second winding 31W2 is wound between the sixth slot 23f and the eleventh slot 23k continuously from the first winding 31W1 wound in the twelfth slot 231.

The third winding 31W3 is wound between the fifth slot 23e and the twenty-fourth slot 23x continuously from the second winding 31W2 wound in the eleventh slot 23k. The fourth winding 31W4 is wound between the eighteenth slot 23r and the twenty-third slot 24w continuously from the third winding 31W3 wound in the twenty-fourth slot 23x.

In this way, the first W-phase wire 31W includes the first coil 31WA wound between the seventeenth slot 23q and the twelfth slot 231 and then wound between the sixth slot 23f and the eleventh slot 23k, and the second coil 31WB wound between the fifth slot 23e and the twenty-fourth slot 23x and then wound between the eighteenth slot 23r and the twenty-third slot 23w.

The second U-phase wire 32U is wound in the plurality of slots 23. The second U-phase wire 32U is wound so as to pass through the same slot 23 the same number of times as the first U-phase wire 31U and to have the same current passing direction as the first U-phase wire 31U, and thus detailed description thereof is omitted here.

The second V-phase wire 32V is wound in the plurality of slots 23. The second V-phase wire 32V is wound so as to pass through the same slot 23 the same number of times as the first V-phase wire 31V and to have the same current passing direction as the first V-phase wire 31V, and thus detailed description thereof is omitted here.

The second W-phase wire 32W is wound in the plurality of slots 23. The second W-phase wire 32W is wound so as to pass through the same slot 23 the same number of times as the first W-phase wire 31W and to have the same current passing direction as the first W-phase wire 31W, and thus detailed description thereof is omitted here.

As illustrated in FIG. 4, the first U-phase wire 31U, the first V-phase wire 31V, the first W-phase wire 31W, the second U-phase wire 32U, the second V-phase wire 32V, and the second W-phase wire 32W are implemented as short-pitch windings in which a pole pitch is different from a coil pitch. Accordingly, as compared with the full-pitch winding, the number of times the winding 30 passes through each slot 23 can be easily aligned in the short-pitch winding in which the coil pitch can be variably set.

Next, the operation of the rotating electrical machine 1 according to the second embodiment will be described.

When the two windings 30 of the same phase are wound in different forms, positive vertices of waveforms of dielectric voltages are usually shifted from each other. When the positive vertices of the waveforms of the dielectric voltages are shifted from each other, it is necessary to precisely perform cooperative control including the control on the first U-, V-, and W-phase wires 31U, 31V, and 31W and the control on the second U-, V-, and W-phase wires 32U, 32V, and 32W in order to smoothly rotate the rotor 10, which increases the difficulty level of the control design.

Therefore, by winding the windings 30 of the same phase in the same slot 23 with the same number of times and the same current passing direction, it is possible to make the vertices of the two windings 30 of the same phase in the waveform of the dielectric voltage to coincide with each other. That is, the phases of the same type can be designed to coincide with each other.

The configurations and effects of the present embodiment described above will be collectively described.
(1) The drive unit 100 including: a first battery 2a; a second battery 2b; a first inverter circuit 3a electrically connected to the first battery 2a via a first power supply line 5a; a second inverter circuit 3b electrically connected to the second battery 2b via a second power supply line 5b; a first U-phase wire 31U electrically connected to the first inverter circuit 3a; a first V-phase wire 31V electrically connected to the first inverter circuit 3a; a first W-phase wire 31W electrically connected to the first inverter circuit 3a; a second U-phase wire 32U electrically connected to the second inverter circuit 3b; a second V-phase wire 32V electrically connected to the second inverter circuit 3b; a second W-phase wire 32W electrically connected to the second inverter circuit 3b; and a rotor 10 rotated by a magnetic field generated by the first U-phase wire 31U, the first V-phase wire 31V, the first W-phase wire 31W, the second U-phase wire 32U, the second V-phase wire 32V, and the second W-phase wire 32W.
   According to this configuration, it is possible to provide a unit having an excellent system when constituting the rotating electrical machine 1 having two three-phase coils (first three-phase coil 31 and second three-phase coil 32).
(2) A winding layout is designed such that the first U-phase wire 31U and the second U-phase wire 32U have a same phase, a winding layout is designed such that the first V-phase wire 31V and the second V-phase wire 32V have a same phase, and a winding layout is designed such that the first W-phase wire 31W and the second W-phase wire 32W have a same phase.
   According to this configuration, in a case where the power supply 2 is divided into two power supplies, even when there is a performance difference between the two power supplies 2, the rotor 10 can be continuously and smoothly rotated without particularly difficult control because the positions of the positive and negative vertices of the induced voltage coincide with each other by making the phases of the same type coincide with each other. This means that, although it may be said that the use of two power supplies 2 of different types is not intended, even when two power supplies 2 of the same type are used, it may be said that the use of two power supplies 2 of the same type is not intended to cause a difference in performance due to deterioration over time caused by manufacturing variations of the two power supplies 2. Therefore, it greatly contributes to reduction in the difficulty level of a control design in consideration of deterioration over time (initial control design, learning control design in which deterioration over time is monitored, or the like).
(3) The first U-phase wire 31U, the first V-phase wire 31V, the first W-phase wire 31W, the second U-phase wire 32U, the second V-phase wire 32V, and the second W-phase wire 32W are wound around a common core (stator core 21) to form the stator 20.

According to this configuration, the stator core 21 of the stator 20 is common, thereby contributing to miniaturization and reduction in the number of components.

Although the embodiment of the present invention has been described above, the above embodiment is merely an application example of the present invention and is not intended to limit the technical scope of the present invention to the specific configuration of the above embodiment.

For example, the case where the winding 30 passes an odd number of times or an even number of times includes not only the case where one winding 30 passes an odd number of times or an even number of times, but also the case where the winding 30 including a bundle of a plurality of conducting wires passes an odd number of times or an even number of times, and the case where the winding 30 including a set of conducting wires wound a plurality of times passes an odd number of times or an even number of times. Therefore, regardless of the number constituting the bundle and the number of times the winding is wound, the winding 30 passes an odd number of times or an even number of times as long as the bundle of conductive wires or the set of conductive wires passes an odd number of times or an even number of times.

In addition, the case where the winding 30 passes through the same slot 23 twice and the case where the winding 30 in which two windings 30 are integrated passes through the same slot 23 once are in the same state. Accordingly, the winding 30 passing through the slot 23 once when the winding 30 is obtained by integrating two windings 30 corresponds to the winding 30 passing through the slot 23 twice.

### DESCRIPTION OF REFERENCE SIGNS

- 100: drive unit (unit)
- 1: rotating electrical machine
- 2a: first battery (first power supply)
- 2b: second battery (second power supply)
- 3a: first inverter circuit
- 3b: second inverter circuit
- 10: rotor (common rotor)
- 20: stator
- 21: stator core (common core)
- 23: slot
- 31U: first U-phase wire
- 31V: first V-phase wire
- 31W: first W-phase wire
- 32U: second U-phase wire
- 32V: second V-phase wire
- 32W: second W-phase wire

## Claims

1. A unit comprising:
a first power supply;
a second power supply;
a first inverter circuit electrically connected to the first power supply via a first power supply line;
a second inverter circuit electrically connected to the second power supply via a second power supply line;
a first U-phase wire electrically connected to the first inverter circuit;
a first V-phase wire electrically connected to the first inverter circuit;
a first W-phase wire electrically connected to the first inverter circuit;
a second U-phase wire electrically connected to the second inverter circuit;
a second V-phase wire electrically connected to the second inverter circuit;
a second W-phase wire electrically connected to the second inverter circuit; and
a common rotor rotated by a magnetic field generated by the first U-phase wire, the first V-phase wire, the first W-phase wire, the second U-phase wire, the second V-phase wire, and the second W-phase wire.

2. The unit according to claim 1, wherein
a winding layout is designed such that the first U-phase wire and the second U-phase wire have a same phase,
a winding layout is designed such that the first V-phase wire and the second V-phase wire have a same phase, and
a winding layout is designed such that the first W-phase wire and the second W-phase wire have a same phase.

3. The unit according to claim 1, wherein
the first U-phase wire, the first V-phase wire, the first W-phase wire, the second U-phase wire, the second V-phase wire, and the second W-phase wire are wound around a common core to form a stator.
